# EUROPEAN PATENT APPLICATION

(11) **EP 1 324 216 A1**
(43) Date of publication of application: **02.07.2003**
(21) Application number: 01131036.4
(22) Date of filing: 28.12.2001
(51) Int. Cl.: G06F 17/30

(54) **Machine for classification of metadata**

(71) Applicant: DEUTSCHE THOMSON-BRANDT GMBH, 78048 Villingen-Schwenningen (DE)
(72) Inventor: Winter, Marco, 30173 Hannover (DE); Adolph, Dirk, 30952 Ronnenberg (DE); Hörentrup, Jobst, 31141 Hildesheim (DE)
(74) Representative: Hartnack, Wolfgang, Dipl.-Ing.

(57) **Abstract**

The invention comprises the useful classification, organization and structuring of different types of data by distinguishing between essence and metadata, physical and abstract data.

A problem to be solved by the invention is to find the means and the corresponding structures and definitions of incoming data.

## Description

The invention relates to a machine for the useful classification, organization and structuring of different types of data by distinguishing between essence and metadata, physical and abstract data.

### Background

If data are being delivered to a Data-Base Management-System (DBMS), it becomes necessary to classify the type of data delivered before it will be inserted into the data base. Different algorithms are necessary for the treatment of different data-formats which must be known by the DBMS (e. g. GIF, JPEG, ASCII-text and PDF-files).

### Invention

It is difficult to update an entire DBMS, if there is no method to distinguish between essence and metadata.
Even an updated DBMS does not use flexible database-structures in order to provide the access to relations supporting several data-formats (links of several data-format-types). It also lacks information about data-formats in order to provide a simple mechanism for the selection of an applicable query-method.

The problem to be solved by the invention is to classify the data with special definitions and format-specifications. These classifications are being kept in one or more databases. This classification allows the database to save several different data-types, so to permit a generalized access upon Metadata, Essence, Physical Data and Abstract Data via a DBMS.
With this knowledge, the database can decide which data-query is to be used, how data is to be interpreted, and if some data can be disregarded for a certain query.

This problem is solved by the method disclosed in claim 1 and by the apparatus disclosed in claim 6.

The invention comprises a separate device, which will classify incoming data regarding its format, content, and relation to the other data (i.e. outside the data itself). The invention is a separate device, which provides information about data. This information is especially necessary when it is to recognize, whether these data contain links (of various types) or these data need special query-methods.

The task of the classification is to distinguish between the so-called metadata and the essence. Besides, the classification will serve for distinguishing between physical data and abstract data.

The terms "Metadata", "Essence", "Physical Data" and "Abstract Data" will be defined hereafter:

All definitions are to be understood from the sight of the device.

**Metadata** are data consisting of essence and of one-or-more links. In the semantic sense, these links describe a link between the essence and other content and can be of different kinds (e. g. an HTML-Link).

**Essence** consists of any data. Annotation: These data can contain none, one, or more metadata (e. g. the essence of metadata can contain other metadata, as well as essence can consist of data, which do not contain any metadata).

**Data** consists of DATA_CNT and DATA_FMT.
**DATA_FMT** is the coding-rule. This is the declaration of the way of saving data **DATA_CNT** in the memory.
Data itself will be the saved data DATA_CNT, formatted conform DATA_FMT.
**DATA_INF** is the information, which is represented directly by DATA_CNT. What is being represented by DATA_CNT, is defined in the format-specification of DATA_FMT. The direct information represented from DATA_INF can only to be understood by the device, if the device knows the format-specification (DATA_FMT).

### Example 1:

A picture is being saved as a GIF-file.
The saved GIF-File itself is the data.
The picture is DATA_INF.
The GIF-Format is DATA_FMT.
The resolution of the picture and all picture-pixels are in DATA_CNT.

### Example 2:

A 2x2-Picture (4 times gray-value 100) will be saved in the following DATA_FMT-format:
   Bytes 0 to 1: ID.
   Byte 2: Horizontal amount of pixels as unsigned integer
   Byte 3: Vertical amount of pixels as unsigned integer
   Bytes 4 to 4+: horizontal amount of pixels multiplied by the vertical amount of pixels. Each byte represents a gray-value of a pixel as an unsigned integer (0=black; 255=white; and
   the integer-values in between (1..254) represent the gray-scales). All pixels of this picture are contained in these bytes (4 to 4+).
   The 1st byte is the upper left pixel of the picture, the 2nd byte is the pixel on the right next to the first, etc. At the end of the line, the next byte will represent the 1st byte in the next line beginning from the left. The next byte continues on the right to this pixel, until the last byte of this picture will represent the lower right-hand pixel of the page.

Data:
Byte 0: 123
Byte 2: 2
Byte 3: 2
Byte 4-7: 100, 100, 100, 100

DATA_CNT:
Bytes 2 to 7, the ID is not part of the picture, it is only defined by the format (DATA_FMT).

DATA_INF:
A 2x2-picture itself:
Annotation: A picture can show e. g. people. The information, that persons are visible, is just implicitly contained in DATA_INF, i. e. it is not defined by the format (DATA_FMT). Such pieces of information are interpretations and have to be generated additionally. Such interpreted information can be regarded as metadata on this picture.

**Physical Data** are data, whose DATA_INF is used for direct physical representation (i. e. "physical representation" is not the physical representation of data in the device. The information saved in DATA_INF, represent a sample of a part of the real word (e. g. a picture or a 3-d-world or a tone).

**Abstract Data** is the contrary of the Physical Data, i. e. all types of data, that are not Physical Data, are Abstract Data.

**Text** is to be regarded to be Abstract Data, because text is always a format for saving data.
From here will result a "gray-zone": formatted text can represent a direct physical representation of data. An example could be e. g. the PDF-Format. DATA_INF is primarily text. The format-information represents only support-information, i. e. if format-information is extracted from a PDF-File, the main information (the pure text) will remain. If the text is being extracted, the main information will be lost.
Conclusion: Due to the fact that the text represents the main information, also formatted text will be regarded in this invention as Abstract Data.

If **DATA_FMT** is unknown from the sight of the device, such data will be categorized as Abstract Data and as pure essence.

Annotation: As described above, these definitions are from the sight of the device, i. e. the device must know the respective format-specifications in order to recognize Text, Abstract Data, Physical Data, Links and Essence. If the device does not know the format-specification, it is not possible for the device to make a classification of data.

### From the Input to the Output of the Device

Input of the device: data. Data are being analyzed.
- If data are Metadata, the output will be: "Data are Metadata".
- If data are not Metadata, but Essence, the output will be "Data are Essence".
- If data are Abstract Data, an additional output will be "Data are Abstract Data".
- If data are not Abstract Data, but Physical Data, an additional output will be "Data are Physical Data". It is advantageous for the device to disclose the type of "Physical Data", e. g. "Data is a color picture (24bit) with the resolution x=200 pixels and y=400 pixels".
- If DATA_FMT of the data is unknown to the device, and therefore the device is not able to classify conforming "Metadata, Essence, Abstract Data, Physical Data", the output will be "DATA_FMT is unknown".

The last point can optionally be a Default-Type-output (i. e. an output "Data are Essence and Abstract Data"). In this case the database should distinguish between fewer kinds.

Additionally, it is helpful if the device distinguishes between, whether data is text or not:
- If DATA_CNT is "Text", the output will be additionally "Data are Text".

Besides, it can be very helpful, to filter at the same time with the help of this knowledge about DATA_FMT if data are usefully dividable, i. e. if these data are a container, which contains more metadata.

If DATA_CNT is a Container, the output will be additionally "Data are a Container, i. e. more metadata can be contained".
Optionally, a precise detail can be included: "Container CONTAINS at least 1 Metadata", or "Container CONTAINS no Metadata at all" or even "Container CONTAINS exactly N Metadata". N is the amount of Metadata contained in the Container.
This device can be updated via the Internet or via other sources, so that more and more formats can be recognized, thus this tool will update itself and get more and more efficient.
Another feature is, if the device can output the format of the analyzed data (DATA_FMT): "DATA_FMT is X". X is the format. Examples for "X" can be e. g. "HTML" or "Text": "DATA_FMT is HTML" or "DATA_FMT is a Text".

The device can be part of another device or can be realized as software, e. g. as an application or a plug-in in a PC.

In principle, the inventive method is suited for classification of incoming data, wherein following steps are included:
- method for analysis, whether incoming data contain CPU-interpretable links to the outside of these data;
- method for detection of CPU-recognizable Physical Data belonging to the found links;
- method for classification of incoming data into Essence, Physical Metadata and Abstract Metadata.

Advantageous additional embodiments of the invention are disclosed in the respective dependent claims.

### Drawings

Exemplary embodiments of the invention are described with reference to the accompanying drawings, which show in:
- Fig. 1: General example for Abstract Metadata;
- Fig. 2: General example for Physical Metadata;
- Fig. 3: Flow Chart for the method according to the Invention;
- Fig. 4: Block diagram for the inventive apparatus;
- Fig. 5: Definition of Data-Types.

### Exemplary embodiments

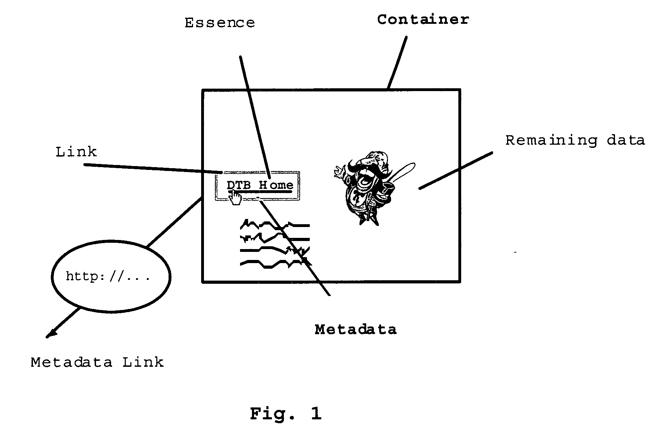

Fig. 1 shows the explanation of Abstract Metadata. All the data are contained in a Container (e. g. an "HTML"-file). The text "DTB Home" is the Essence of this Metadata, which is visible to the user. The mouse cursor pointing on "DTB Home" indicates, that the text "DTB Home" contains a Link. This Link, which is a Metadata Link and can only be seen by the CPU, belongs to the text. The reference of this Link is in this case http://www.dtb.de. The Metadata link thus, consists of an Essence and a Link.
Its reference is <a href=http://www.dtb.de>DTB Home</a>.
The rest is remaining data, which consists of text, pictures, other links, etc. These data also belong to the container, but not to the described Metadata.

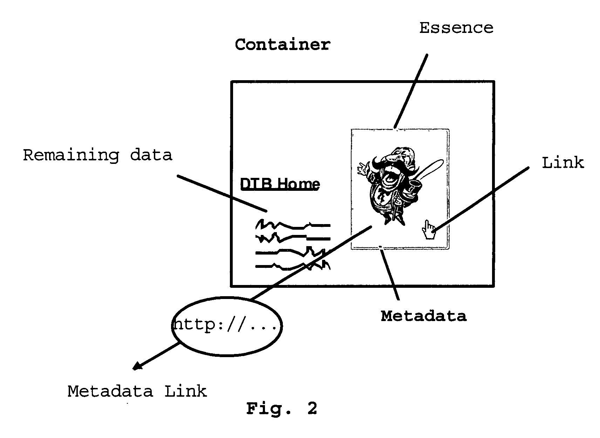

Fig. 2 shows the explanation of Physical Metadata. All the data are contained in a Container (e. g. an "HTML"-file). In this case, the picture is the Essence of this Metadata, which is visible to the user (reference: <img src=Anton.jpg width=108 height=73>). The mouse cursor pointing on the picture indicates, that the picture contains a Link. This Link, which is a Metadata Link and can only be seen by the CPU, belongs to the picture. The Metadata link thus, consists of an Essence and a Link.
Its reference is <a href=http://www.dtb.de>
<img src=Anton.jpg width=108 height=73></a>.
The rest, the remaining data, consists of text, pictures, other links, etc. These data also belong to the container, but not to the described Metadata.

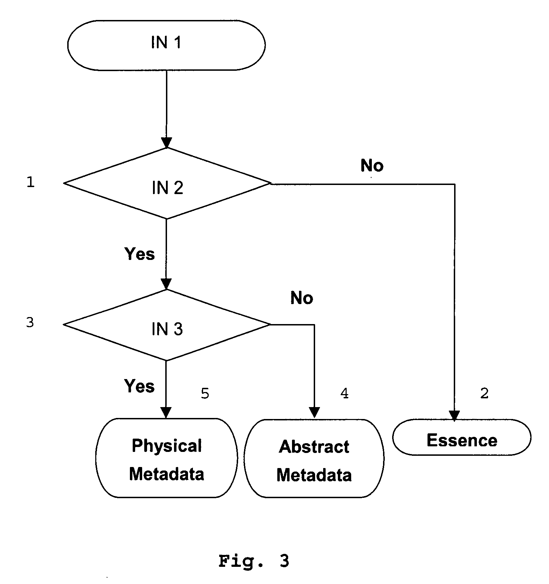

Fig. 3 shows the block diagram of the invention. The purpose of the invention is to usefully classify different types of incoming data. The incoming data IN 1 are being analyzed in block IN 2, whether data contains CPU-interpretable links to the outside of these data. In case the answer is No, data is considered to be Essence.
Otherwise, if the answer is Yes, the question is, whether there is any CPU-recognizable Physical Data belonging to this link. This will happen in IN 3. If the answer is No, the result will be Abstract Metadata. If the answer is Yes, the result of the classification is Physical Metadata.

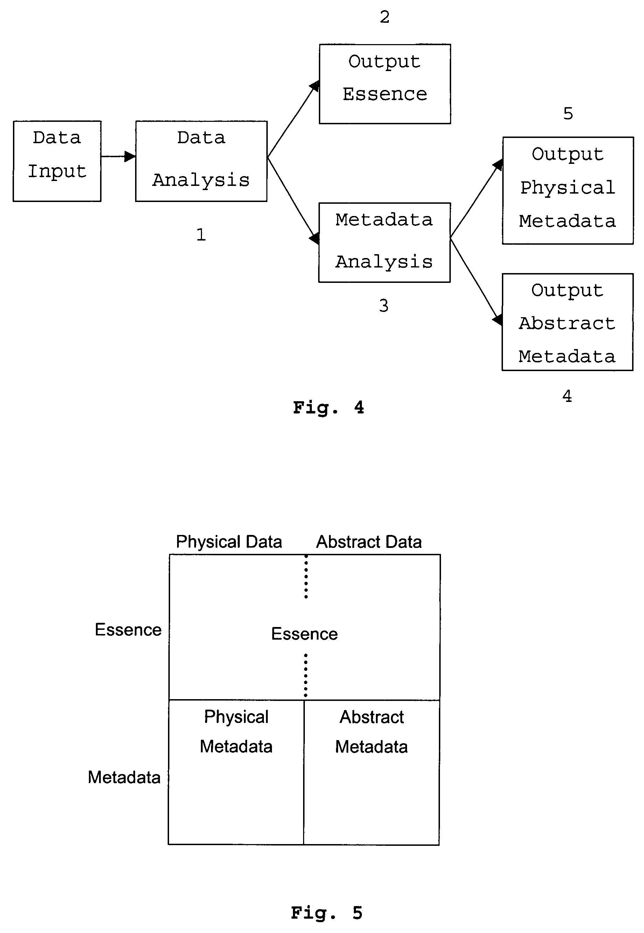

Fig. 4 shows the Block Diagram of the Inventive apparatus. After Data-Input, data are being first classified conforming Essence or Metadata, so that the apparatus can choose the correct query-method.
Means (1) will analyze the incoming data, whether CPU-interpretable links to the outside of these data are contained. If incoming data do not contain links, it is sent to means (2) for output of Essence. Otherwise it is being sent to means (3), which detects these CPU-recognizable links for Metadata. The data being classified as Metadata, must be classified for a second time as Physical or Abstract Metadata. Means (4) will output Abstract Metadata and means (5) will output Physical Metadata.

Fig. 5 shows the overview and the significant difference between the various Data Types conforming the invention. Essence and Metadata, can be divided into a physical and an abstract group. The Physical (Essence) Data are pictures, sounds, and all other data that can be detected by the senses. Abstract (Essence) Data are data, which have to be interpreted (e. g. text, spoken words, sign-language).
More important than these data are Metadata. They can be divided into 2 groups, too.
Physical Metadata are e. g. pictures with a link, conforming Physical Essence, which are e. g. pictures.
Abstract Metadata are e. g. texts with a link, like Abstract Essence, which are e. g. texts.

## Claims

1. Method for classification of incoming data, **characterized in that** this information is necessary to recognize whether these data contain various links or these data need special query methods, wherein following steps are included:
- method for analysis, whether incoming data contain CPU-interpretable links to the outside of these data;
- method for detection of CPU-recognizable Physical Data belonging to the found links;
- method for classification of incoming data into Essence, Physical Metadata and Abstract Metadata.

2. Method according to claim 1, wherein Metadata are analyzed for links.

3. Method according to claim 1 or 2, wherein Essence analyzed for included Essence or additional Metadata.

4. Method according to claims 1 to 3, wherein data are analyzed conforming **DATA_FMT, DATA_CNT** and **DATA_INF.**

5. Method according to claims 1 to 3, wherein Physical Data, Abstract Data and Text are being recognized.

6. Apparatus for classification of incoming data, wherein this apparatus recognizes, whether these data contain links or need special query methods, the apparatus includes:
- means (1) for analysis, whether incoming data contain CPU-interpretable links to the outside of these data (detection of Metadata/Essence) ;
- means (2) for output of Essence;
- means (3) for detection of CPU-recognizable Physical/Abstract Metadata belonging to the found links;
- means (4) for output of Abstract Metadata;
- means (5) for output of Physical Metadata;
- optional means for detection of "DAT_FMT is unknown";
- optional means for detection of "Text" and non-"Text";
- optional means for detection of further Data-Container;
- optional means for detection of the amount of data in the Data-Container;
- optional means for detection of data-characteristic (i. e. "HTML" or "Text") in the Data-Container.
